# EUROPÄISCHE PATENTANMELDUNG

(11) **EP 3 494 788 A1**
(43) Veröffentlichungstag der Anmeldung: **12.06.2019**
(21) Anmeldenummer: 17205892.7
(22) Anmeldetag: 07.12.2017
(51) Int. Cl.: A01M 1/22, A01M 1/02, A01M 1/10, A01M 1/04, A01M 1/20

(54) **BEKÄMPFUNG VON BIENENSCHÄDLINGEN**

(71) Anmelder: Bayer CropScience Aktiengesellschaft, 40789 Monheim am Rhein (DE)
(72) Erfinder: Die Erfindernennung liegt noch nicht vor
(74) Vertreter: BIP Patents

(57) **Zusammenfassung**

Die vorliegende Erfindung betrifft die Bekämpfung von Bienenschädlingen in einem Bienenstock. Gegenstände der vorliegenden Erfindung sind eine Vorrichtung, ein System und ein Verfahren zur Bekämpfung von Bienenschädlingen, insbesondere zur Bekämpfung des Kleinen Beutenkäfers.

## Beschreibung

Die vorliegende Erfindung betrifft die Bekämpfung von Bienenschädlingen in einem Bienenstock. Gegenstände der vorliegenden Erfindung sind eine Vorrichtung, ein System und ein Verfahren zur Bekämpfung von Bienenschädlingen, insbesondere zur Bekämpfung des Kleinen Beutenkäfers.

Bienen zählen weltweit zu den wichtigsten Bestäubern. Sie tragen in erheblichem Maße zur Erhaltung von Wild- und Kulturpflanzen und deren Erträgen bei; ihre ökologische Bedeutung ist beträchtlich.

Daher ist es wichtig, Bienen vor Schädlingen zu schützen.

Der Kleine Beutenkäfer (*Aethina tumida*) ist ein Parasit aus der Familie der Glanzkäfer. Der Käfer vermehrt sich sehr stark in Bienenvölkern. Die sich aus den Eiern entwickelnden Larven fressen Honig, Pollen und Brut und zerstören dabei die Waben.

Seit etwa 1940 ist der Kleine Beutenkäfer im südlichen Afrika als Bienenparasit bekannt. 1996 tauchte er zum ersten Mal im südöstlichen Nordamerika auf und verbreitete sich von dort mit rasender Geschwindigkeit über die USA. Im Gegensatz zu den afrikanischen Bienenrassen, die sich gegen den Parasiten effizient zur Wehr setzen können, sind die nordamerikanischen Rassen der Westlichen Honigbiene dazu nicht in der Lage. 2004 wurde der Beutenkäfer erstmals auf europäischem Festland, in Portugal, festgestellt.

Der Kleine Beutenkäfer gehört zu den gefürchtetsten Bienenparasiten, da bei Massenbefall ein ganzes Volk innerhalb kürzester Zeit vernichtet werden kann. Die momentan zur Verfügung stehenden chemischen Bekämpfungsmaßnahmen bergen das Risiko von Resistenzbildungen, Kontaminationen der Bienenprodukte und Effekte auf die Bienen selbst.

Gesucht wird daher nach Möglichkeiten Bienenschädlinge wie den Kleinen Beutenkäfer zu bekämpfen, ohne dabei die Bienen und den von den Bienen produzierten Honig zu beeinträchtigen.

Dies wird durch die vorliegende Erfindung erreicht.

Ein erster Gegenstand der vorliegenden Erfindung ist eine Vorrichtung zur Bekämpfung von Bienenschädlingen in einem Bienenstock, umfassend
- einen Behälter mit einem Innenraum und mindestens einer Öffnung, durch die ein Bienenschädling in den Innenraum des Behälters gelangen kann,
- ein Bekämpfungsmittel, das einen Bienenschädling, der durch die mindestens eine Öffnung in den Innenraum des Behälters gelangt ist, unschädlich macht,
dadurch gekennzeichnet, dass die mindestens eine Öffnung so dimensioniert ist, dass keine Biene aus dem Bienenstock in den Innenraum des Behälters gelangt.

Ein weiterer Gegenstand der vorliegenden Erfindung ist ein Verfahren zur Bekämpfung eines Bienenschädlings in einem Bienenstock, umfassend die Schritte
- Bereitstellen eines Behälters mit einem Innenraum und mindestens einer Öffnung, durch die ein Bienenschädling in den Innenraum des Behälters gelangen kann, wobei der Behälter über ein Bekämpfungsmittel verfügt, das einen Bienenschädling, der durch die mindestens eine Öffnung in den Innenraum des Behälters gelangt ist, unschädlich macht,
- Platzieren des Behälters in dem Bienenstock,
dadurch gekennzeichnet, dass die mindestens eine Öffnung so dimensioniert ist, dass keine Biene aus dem Bienenstock in den Innenraum des Behälters gelangt.

Ein weiterer Gegenstand der vorliegenden Erfindung ist die Verwendung der erfindungsgemäßen Vorrichtung in einem Bienenstock.

Ein weiterer Gegenstand der vorliegenden Erfindung ist ein System umfassend
- eine erfindungsgemäße Vorrichtung, und
- eine Erkennungseinheit zur Erkennung eines Bienenschädlings am Eingang und/oder im Inneren eines Bienenstocks.

Ein weiterer Gegenstand der vorliegenden Erfindung ist ein System umfassend
- eine erfindungsgemäße Vorrichtung, und
- eine oder mehrere Quellen für sichtbares Licht.

Die Erfindung wird nachstehend näher erläutert, ohne zwischen den Erfindungsgegenständen (Verfahren, Vorrichtung, Verwendung, Systeme) zu unterscheiden. Die nachfolgenden Erläuterungen sollen vielmehr für alle Erfindungsgegenstände in analoger Weise gelten, unabhängig davon, in welchem Kontext (Verfahren, Vorrichtung, Verwendung, Systeme) sie erfolgen.

Wenn in der vorliegenden Beschreibung oder in den Patentansprüchen Schritte in einer Reihenfolge genannt werden, bedeutet dies nicht zwingend, dass die Erfindung auf die genannte Reihenfolge beschränkt ist. Vielmehr ist denkbar, dass die Schritte auch in einer anderen Reihenfolge oder auch parallel zueinander ausgeführt werden können; es sei denn, ein Schritt baut auf einem anderen Schritt auf, was zwingend erforderlich macht, dass der aufbauende Schritt nachfolgend ausgeführt wird (was im Einzelfall aber deutlich wird). Die genannten Reihenfolgen stellen damit bevorzugte Ausführungsformen des erfindungsgemäßen Verfahrens dar.

Die vorliegende Erfindung lässt sich für alle Bienenschädlinge anwenden, die kleiner sind als eine Biene. Ein Beispiel ist der Kleine Beutenkäfer. Zur Vereinfachung wird die Erfindung nachfolgend am Beispiel des Kleinen Beutenkäfers näher erläutert, ohne die Erfindung auf diesen Bienenschädling beschränken zu wollen. Vielmehr wird ist der Kleine Beutenkäfer lediglich derjenige Bienenschädling, der mittels der vorliegenden Erfindung vorzugsweise bekämpft wird.

Die erfindungsgemäße Vorrichtung umfasst einen Behälter. Der Behälter hat die Aufgabe, einen Innenraum bereitzustellen, der für einen Kleinen Beutenkäfer zugänglich ist, aber von einer Biene nicht erreicht werden kann. Eine weitere Aufgabe des Behälters besteht darin, Bekämpfungsmittel für die Bekämpfung des Kleinen Beutenkäfers aufzunehmen.

Der Innenraum muss so groß sein, dass Bekämpfungsmittel und eine Vielzahl von Kleinen Beutenkäfern aufgenommen werden können. Der Innenraum kann beispielsweise eine Größe von 10 cm³ bis 500 cm³ aufweisen. Er kann aber auch größer oder kleiner sein. Behälterwandungen trennen den Innenraum gegenüber der Außenwelt ab.

Die Behälterwandungen können aus Holz, Kunststoff, Metall, Keramik, Glas und/oder anderen Materialien gefertigt sein. Auch die Verwendung von Verbundstoffen ist denkbar. Vorzugsweise besteht die Behälterwandung aus einem Material, das für sichtbares Licht undurchlässig ist.

Der Behälter ist vorzugsweise zylinderförmig ausgeführt und er verfügt vorzugsweise über eine ebene Grundfläche, um ihn einfach in einem Bienenstock platzieren zu können.

In mindestens einer der Behälterwandungen ist mindestens eine Öffnung eingebracht, die so dimensioniert ist, dass ein Kleiner Beutenkäfer durch sie von der Außenwelt in den Innenraum des Behälters gelangen kann. Die mindestens eine Öffnung ist ferner so dimensioniert, dass keine Biene durch die Öffnung in den Innenraum des Behälters gelangen kann. Da der Kleine Beutenkäfer kleiner als eine Biene ist, muss die mindestens eine Öffnung so gestaltet sein, dass der Kleine Beutenkäfer hindurchpasst und eine Biene nicht. Die mindestens eine Öffnung kann rund, oval, elliptisch oder eckig sein. Vorzugsweise ist sie rund oder oval ausgeführt. Vorzugsweise hat sie eine maximale Breite und/oder maximale Höhe von 2,9 mm bis 3,3 mmm vorzugsweise eine maximale Breite und/oder maximale Höhe von 3 mm bis 3,2 mm.

Vorzugsweise sind mehrere solcher Öffnungen vorhanden. In einer bevorzugten Ausführungsform sind mehrere, vorzugsweise 3 bis 100, besonders bevorzugt 5 bis 50 Öffnungen in mehreren Behälterwandungen (vorzugsweise in einander gegenüberliegenden Behälterwandungen) in Bodennähe (d.h. in der Nähe der Grundfläche) eingebracht.

In dem Innenraum des Behälters ist ein Bekämpfungsmittel eingebracht, das einen Kleinen Beutenkäfer unschädlich macht. Vorzugsweise handelt es sich um ein Bekämpfungsmittel, das den Kleinen Beutenkäfer tötet.

In einer bevorzugten Ausführungsform handelt es sich bei dem Bekämpfungsmittel um eine Einheit, die einen Kleinen Beutenkäfer mit Hilfe elektrischer Energie unschädlich macht. In einer bevorzugten Ausführungsform sind in dem Innenraum des Behälters zwei Elektroden eingebracht, zwischen denen eine elektrische Spannung angelegt werden kann. Die Elektroden sind so angeordnet, dass ein Kleiner Beutenkäfer problemlos zwischen die Elektroden gelangen kann. Vorzugsweise weisen die Elektroden einen Abstand von 3 mm bis 1 cm, vorzugsweise von 3,1 mm bis 6 mm, noch mehr bevorzugt 3,1 mm bis 5 mm zueinander auf. Vorzugsweise ist eine erste Elektrode auf dem Boden des Behälters angebracht und eine zweite Elektrode in einem über die Elektrodenfläche konstanten Abstand oberhalb der ersten Elektrode angebracht. Vorzugsweise erstreckt sich die erste Elektrode über den gesamten Boden des Behälters; vorzugsweise erstreckt sich die zweite Elektrode über die gesamte Fläche der ersten Elektrode (in konstantem Abstand oberhalb der ersten Elektrode).

Als erste Elektrode wird vorzugsweise eine Metallplatte, vorzugsweise aus Kupfer verwendet.

Als zweite Elektrode wird vorzugsweise ein Drahtgitter, vorzugsweise aus Kupfer verwendet. Die Maschenweite ist vorzugsweise kleiner als die Länge eines Kleinen Beutenkäfers. Vorzugsweise ist die Maschenweite kleiner als 5 mm.

Die Elektroden sind mit einer Spannungsquelle verbunden, die sich in dem Behälter oder außerhalb des Behälters befinden kann. Vorzugsweise weist der Behälter neben einem Innenraum zur Aufnahme der Elektroden noch einen zweiten Innenraum zur Aufnahme der Spannungsquelle auf.

Befindet sich in dem Zwischenraum zwischen der ersten Elektrode und der zweiten Elektrode ein Kleiner Beutenkäfer, so führt dies dazu, dass bei genügend hoher Spannung zwischen der ersten und der zweiten Elektrode ein elektrischer Funke von einer Elektrode zur anderen Elektrode überspringt, der den Kleinen Beutenkäfer erfasst und unschädlich macht.

Vorzugsweise ist eine Steuereinheit vorhanden, die die Spannungsquelle dazu veranlasst, eine Spannung zwischen den Elektroden anzulegen. Vorzugsweise befindet sich die Steuereinheit zusammen mit der Spannungsquelle in dem zweiten Innenraum des Behälters.

Es ist denkbar, dass die Steuereinheit so konfiguriert ist, dass sie zu festgelegten Zeitpunkten und/oder nach Ablauf festgelegter Zeitspannen und/oder zu zufälligen Zeitpunkten für eine definierte Zeitspanne die Spannungsquelle dazu veranlasst, eine Spannung zwischen den Elektroden anzulegen. Denkbar ist aber auch, dass die Steuereinheit einen externen Trigger empfängt und die Spannungsquelle infolge des externen Triggers dazu veranlasst, eine Spannung zwischen den Elektroden anzulegen. Es ist beispielsweise denkbar, dass ein Sensor erkennt, ob ein Lebewesen durch eine Öffnung in den Innenraum gelangt ist oder sich im Innenraum befindet und infolgedessen ein Signal (Trigger) an die Steuereinheit übermittelt, die ihrerseits dafür sorgt, dass für eine definierte Zeitspanne eine Spannung zwischen den Elektroden angelegt wird. Es ist denkbar, dass die Spannung erst nach einer definierten Zeitspanne, nachdem ein Sensor ein Lebewesen registriert hat, angelegt wird, zum Beispiel 1 Sekunde bis 10 Sekunden später.

Bei dem Sensor kann es sich zum Beispiel um eine oder mehrere Lichtschranken an einer Öffnung oder an mehreren Öffnungen des Behälters und/oder im Innenraum des Behälters handeln. Denkbar ist auch ein Mikrofon, das Geräusche (z.B. Krabbelgeräusche) des Kleinen Beutenkäfers registriert. Auch ein Bewegungssensor ist denkbar.

Es ist denkbar, den Behälter mit Mitteln auszustatten, die zu definierten Zeitpunkten und/oder nach Ablauf definierter Zeitspannen und/oder nach einer definierten Anzahl von Stromschlägen zwischen der ersten und der zweiten Elektrode bereits unschädlich gemachte Käfer aus dem Innenraum des Behälters entfernt.

Es ist denkbar, in den Innenraum des Behälters ein Lockmittel einzubringen, um den Kleinen Beutenkäfer in den Innenraum zu locken.

Es ist bekannt, dass der Kleine Beutenkäfer Licht scheut und dunkle Ecken aufsucht. In einer bevorzugten Ausführungsform ist/sind daher eine oder mehrere Quellen für sichtbares Licht in dem Bienenstock positioniert, die den Kleinen Beutenkäfer in den Innenraum treiben sollen. Denkbar ist, eine oder mehrere Quellen so zu konfigurieren, dass ein Helligkeitsgradient entsteht, bei dem die Helligkeit in Richtung des Innenraums abnimmt.

In einer weiteren bevorzugten Ausführungsform wird die Vorrichtung zur Bekämpfung des Kleinen Beutenkäfers mit einer Vorrichtung zur Erkennung des Kleinen Beutenkäfers kombiniert.

Vorzugsweise ist die Erkennungsvorrichtung im Eingangsbereich des Bienenstocks angebracht und so konfiguriert, dass sie einen Kleinen Beutenkäfer, der sich in Richtung des Eingangs zum Bienenstock bewegt, erkannt wird.

Die Erfindung wird nachstehend anhand von Figuren näher erläutert, ohne die Erfindung auf die in den Figuren gezeigten Merkmale und Merkmalskombinationen beschränken zu wollen.

Es zeigen:
Fig. 1 zeigt schematisch eine Ausführungsform der erfindungsgemäßen Vorrichtung (1) von drei Seiten (a, d, e), von oben (b) und von unten (c).
Fig. 2 zeigt schematisch eine Ausführungsform der erfindungsgemäßen Vorrichtung (1) in einer Querschnittsdarstellung.

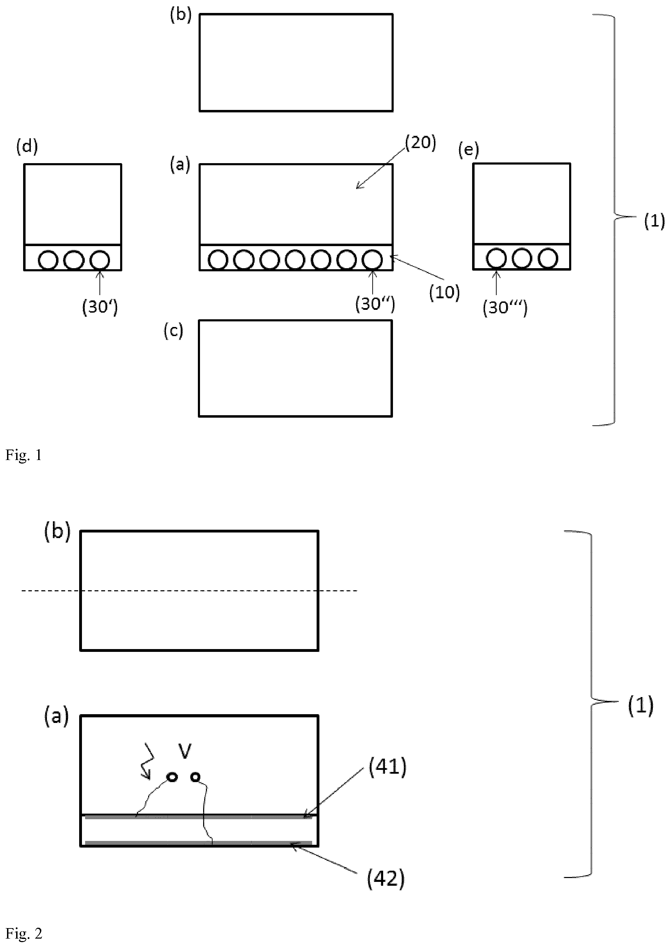

Die in Fig. 1 gezeigte Ausführungsform ist als geschlossener Behälter dargestellt. Der Behälter ist quaderförmig. Er lässt sich in zwei Bereiche unterteilen, einen unteren Bereich (10) und einen oberen Bereich (20), die voneinander durch eine Wandung getrennt sind. Im unteren Bereich (10) ist ein erster Innenraum untergebracht. Im oberen Bereich (20) ist ein zweiter Innenraum untergebracht. In den ersten Innenraum ist ein Bekämpfungsmittel für einen Bienenschädling eingebracht (in der Figur nicht zu sehen). Ein Bienenschädling kann in den ersten Innenraum die eine Mehrzahl an Öffnungen gelangen, von denen in der Figur drei Öffnungen (30', 30", 30''') hervorgehoben sind, um zu zeigen, dass sich Öffnungen an mehreren Seiten des Behälters befinden können. Auch an der vierten, in Fig. 1 nicht gezeigten Seite des Behälters können weitere Öffnungen vorhanden sein. Die Öffnungen sind so dimensioniert, dass ein Bienenschädling hindurchpasst, während eine Biene zu groß ist und nicht hindurchpasst.

In Figur 2 ist die aus Figur 1 bereits bekannte Vorrichtung von der Seite (a) im Querschnitt entlang der gestrichelten Linie der Ansicht (b) gezeigt. In den ersten Innenraum im unteren Bereich sind zwei Elektroden (41, 42) eingebracht, die sich entlang des Bodens und der Decke des Innenraums erstrecken. Ein Bienenschädling, der in den Innenraum gelangt, befindet sich zwischen den beiden Elektroden. Der Abstand der Elektroden ist über die Ausdehnung der Elektroden konstant und etwas größer als die Höhe des Bienenschädlings. In dem zweiten Innenraum im oberen Bereich ist eine Spannungsquelle (V) eingebracht, die über Kabel mit den Elektroden verbunden ist.

## Patentansprüche

1. Vorrichtung zur Bekämpfung von Bienenschädlingen in einem Bienenstock, umfassend
- einen Behälter mit einem Innenraum und mindestens einer Öffnung, durch die ein Bienenschädling in den Innenraum des Behälters gelangen kann,
- ein Bekämpfungsmittel, das einen Bienenschädling, der durch die mindestens eine Öffnung in den Innenraum des Behälters gelangt ist, unschädlich macht,
**dadurch gekennzeichnet, dass** die mindestens eine Öffnung so dimensioniert ist, dass keine Biene aus dem Bienenstock in den Innenraum des Behälters gelangt.

2. Vorrichtung gemäß Anspruch 1, wobei die mindestens eine Öffnung eine maximale Breite und/oder maximale Höhe von 2,9 mm bis 3,3 mmm, vorzugsweise eine maximale Breite und/oder maximale Höhe von 3 mm bis 3,2 mm aufweist.

3. Vorrichtung gemäß einem der Ansprüche 1 oder 2, **dadurch gekennzeichnet, dass** sich im Innenraum zwei Elektroden befinden, zwischen denen eine Spannung angelegt werden kann.

4. Vorrichtung gemäß Anspruch 3, wobei sich die erste Elektrode entlang des Bodens des Innenraums erstreckt und sich die zweite Elektrode in konstantem Abstand oberhalb der ersten Elektrode über die gleiche Fläche erstreckt wie die erste Elektrode.

5. Vorrichtung gemäß Anspruch 4, wobei die erste Elektrode und die zweite Elektrode einen Abstand von 3 mm bis 1 cm, vorzugsweise von 3,1 mm bis 6 mm, noch mehr bevorzugt 3,1 mm bis 5 mm zueinander aufweisen.

6. Vorrichtung gemäß Anspruch 4 oder 5, wobei die erste Elektrode eben ausgeführt ist und vorzugsweise Kupfer enthält und die zweite Elektrode als Drahtgitter ausgeführt ist.

7. Vorrichtung gemäß Anspruch 6, wobei das Drahtgitter eine Maschenweite von weniger als 5 mm aufweist.

8. Vorrichtung gemäß einem der Ansprüche 1 bis 7, umfassend Mittel zum Detektieren eines Bienenschädlings im Innenraum.

9. System umfassend eine Vorrichtung gemäß einem der Ansprüche 1 bis 8 und eine Erkennungseinheit zur Erkennung eines Bienenschädlings im Eingangsbereichs des Bienenstocks.

10. System umfassend eine Vorrichtung gemäß einem der Ansprüche 1 bis 8 und eine oder mehrere Quellen für sichtbares Licht.

11. Verfahren zur Bekämpfung eines Bienenschädlings in einem Bienenstock, umfassend die Schritte
- Bereitstellen eines Behälters mit einem Innenraum und mindestens einer Öffnung, durch die ein Bienenschädling in den Innenraum des Behälters gelangen kann, wobei der Behälter über ein Bekämpfungsmittel verfügt, das einen Bienenschädling, der durch die mindestens eine Öffnung in den Innenraum des Behälters gelangt ist, unschädlich macht,
- Platzieren des Behälters in dem Bienenstock,
**dadurch gekennzeichnet, dass** die mindestens eine Öffnung so dimensioniert ist, dass keine Biene aus dem Bienenstock in den Innenraum des Behälters gelangt.

12. Verfahren gemäß Anspruch 11, umfassend die Schritte
- Bereitstellen von zwei Elektroden im Innenraum des Behälters,
- Anlegen einer Spannung zwischen den Elektroden,
- Überspringen eines Stromschlags zwischen den Elektroden, wobei der Stromschlag den Bienenschädling zwischen den Elektroden erfasst.

13. Verfahren gemäß Anspruch 12, umfassend die Schritte
- Detektieren eines Bienenschädlings im Innenraum
- Anlegen einer Spannung zwischen den Elektroden als Folge des Detektierens des Bienenschädlings.

14. Verfahren gemäß einem der Ansprüche 11 bis 13, ferner umfassend die Schritte
- Locken des Bienenschädlings in den Innenraum mit Hilfe eines Lockmittels, und/oder
- Treiben des Bienenschädlings in den Innenraum mit Hilfe von sichtbarem Licht außerhalb des Innenraums.

15. Verwendung der erfindungsgemäßen Vorrichtung nach einem der Ansprüche 1 bis 8 in einem Bienenstock.
